(19) **Europäisches Patentamt European Patent Office Office européen des brevets**

(11) **EP 3 979 260 B1**

(12) **EUROPEAN PATENT SPECIFICATION**

(45) Date of publication and mention of the grant of the patent:
**20.11.2024 Bulletin 2024/47**

(51) International Patent Classification (IPC):
**G21C 9/016** (2006.01) **G21C 17/00** (2006.01)
**G06F 30/20** (2020.01) **G06F 30/13** (2020.01)
**G21C 15/18** (2006.01) **G06F 119/08** (2020.01)

(21) Application number: **19957791.7**

(22) Date of filing: **25.12.2019**

(52) Cooperative Patent Classification (CPC):
**G21C 17/001; G06F 30/13; G06F 30/20; G21C 9/016;** G06F 2119/08; G21C 15/18; Y02E 30/30

(86) International application number:
**PCT/CN2019/128261**

(87) International publication number:
**WO 2021/128059 (01.07.2021 Gazette 2021/26)**

(54) **TEST SYSTEM, AND HEATING AND TEMPERATURE MEASURING DEVICE FOR SIMULATING REACTOR PRESSURE VESSEL HEAT EXCHANGE CHARACTERISTICS OF NUCLEAR POWER PLANT**

PRÜFSYSTEM, UND HEIZ- UND TEMPERATURMESSGERÄT ZUR SIMULATION VON REAKTORDRUCKBEHÄLTER-WÄRMETAUSCHEIGENSCHAFTEN VON KERNKRAFTWERKEN

SYSTÈME D'ESSAI, ET DISPOSITIF DE CHAUFFAGE ET DE MESURE DE TEMPÉRATURE POUR SIMULER DES CARACTÉRISTIQUES D'ÉCHANGE DE CHALEUR D'UNE CUVE SOUS PRESSION DE RÉACTEUR D'UNE CENTRALE NUCLÉAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.04.2022 Bulletin 2022/14**

(73) Proprietors:
- **China Nuclear Power Technology Research Institute Co., Ltd.**
  **Shenzhen, Guangdong 518031 (CN)**
- **China General Nuclear Power Corporation**
  **Shenzhen, Guangdong 518028 (CN)**
- **CGN Power Co., Ltd.**
  **Shenzen, Guangdong 518028 (CN)**

(72) Inventors:
- **ZHAN, Dekui**
  **Shenzhen, Guangdong 518031 (CN)**
- **LIANG, Junming**
  **Shenzhen, Guangdong 518031 (CN)**
- **CHEN, Peng**
  **Shenzhen, Guangdong 518031 (CN)**
- **XIA, Shaoxiong**
  **Shenzhen, Guangdong 518031 (CN)**
- **ZHANG, Huiyong**
  **Shenzhen, Guangdong 518031 (CN)**
- **FU, Hui**
  **Shenzhen, Guangdong 518031 (CN)**
- **ZHANG, Lei**
  **Shenzhen, Guangdong 518031 (CN)**
- **WU, Zijie**
  **Shenzhen, Guangdong 518031 (CN)**

(74) Representative: **Westphal, Mussgnug & Partner, Patentanwälte mbB**
**Werinherstraße 79**
**81541 München (DE)**

(56) References cited:
CN-A- 103 594 133  CN-A- 103 594 133
CN-A- 105 161 145  CN-A- 106 251 919
CN-A- 106 251 919  CN-A- 106 952 669
CN-A- 109 211 969  CN-A- 109 509 564
CN-U- 204 760 047  KR-A- 20100 125 147
KR-A- 20100 125 147

- **NOH SANG W ET AL: "Critical heat flux for APR1400 lower head vessel during a severe accident", NUCLEAR ENGINEERING AND DESIGN, AMSTERDAM, NL, vol. 258, 5 March 2013 (2013-03-05), pages 116 - 129, XP028524962, ISSN: 0029-5493, DOI: 10.1016/J.NUCENGDES.2012.12.021**

## Description

### Technical Field

The present invention relates to the technical field of nuclear power, more particularly, to a test system, and a heating and temperature measuring device for simulating RPV heat exchange characteristics of a nuclear power plant.

### Background Art

When a severe accident occurs in a nuclear power plant, a core is exposed and finally melt due to a coolant loss of a primary loop system of the nuclear power plant, and the core corium will eventually collapse into the lower head of RPV (reactor pressure vessel). If the core corium cannot be cooled in time, the corium will eventually melt through the lower head of the RPV because of the core decay heat, thus the core melt falls in the reactor pit and may possibly melt through a bottom plate of a containment, resulting in a large leakage of radioactive substance in the end.

To solve the problems above, a reactor pit water injection system is designed in current nuclear power plant to inject water into the reactor pit to submergie the pit, such that the lower head of the RPV is cooled. The design and construction of the reactor pit water injection system in the prior art is obtained through one-dimensional and two-dimensional test and theoretical design.

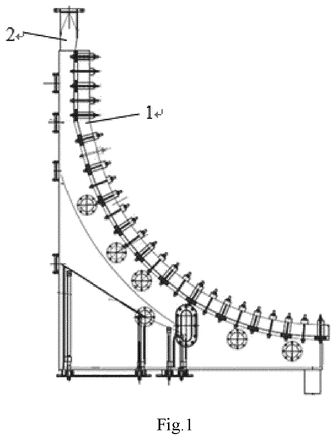

As shown in Fig. 1, a test section in a prior art for processing a two-dimensional heating test consists of a copper heating section 1 and a stainless-steel flow channel 2. The copper heating section 1 is used to simulate a wall surface of the RPV heated by the core melt when an accident occurs, and the stainless-steel flow channel 2 is used to simulate a flow channel outside the lower head of the RPV A width of the copper heating section 1 is the same from the top to the bottom, and a heating rod and a thermocouple are inserted from a side surface and are arranged parallel to a heating surface. During the test, all cooling water entering the flow channel 2 of the test section from an inlet at a bottom of the test section can only flow in one direction from the bottom to the top of the test section in the narrow flow channel, so that the three-dimensional flow state of an outer wall surface of the lower head of the RPV under a real condition cannot be simulated, thereby a great difference is existed with the actual flow condition.

Examples of devices for simulating the heat flux of a nuclear reactor are described in the applications CN 103 594 133 B, CN 106 251 919 A and KR 2010 0125147 A, as well as in the publication NOH SANG W ET AL: "Critical heat flux for APR1400 lower head vessel during a severe accident", NUCLEAR ENGINEERING AND DESIGN, AMSTERDAM, NL, vol. 258, 5 March 2013, pages 116-129.

## Summary

A technical problem to be solved in the present invention is to provide a heating and temperature measuring device for simulating PRV heat exchange characteristics when an accident occurs, and a test system for simulating RPV heat exchange characteristics of a nuclear power plant.

A technical solution adopted by the present invention to solve the technical problem is to provide a heating and temperature measuring device for simulating RPV heat exchange characteristics when an accident occurs, wherein the heating and temperature measuring device includes a tube portion, a hemispherical lower head connected to a lower end of the tube portion, a heating assembly for heating the lower head, and a temperature measuring assembly disposed in the lower head;

the temperature measuring assembly is configured to monitor a temperature change in a wall thickness direction of the lower head to monitor a surface temperature change of the lower head. An inner wall surface of the lower head is provided with a number of temperature measuring holes along a spherical center direction of the lower head. Corresponding to the heating assembly, a number of heating holes are provided in the inner wall surface of the lower head along a spherical center direction of the lower head.

Preferably, the temperature measuring assembly includes a number of sets of thermocouples, and each set of thermocouple includes two thermocouples, and the thermocouple is inserted in the lower head perpendicular to an inner wall surface of the lower head.

Preferably, the thermocouples are inserted in the temperature measuring holes one by one; depths of the two temperature measuring holes corresponding to each set of thermocouples are different.

Preferably, the depths of the two temperature measuring holes corresponding to each set of thermocouples are 102mm-107mm, 112 mm-117mm respectively.

Preferably, the lower head is provided with an annular recess on an inner wall surface adjacent to an opening side, and the lower head is separated into a non-heating section and a heating section respectively on an upper side and a lower side of the recess; the lower head is connected with the tube portion via the non-heating section, and the heating assembly and the temperature measuring assembly are disposed in the heating section.

Preferably, the heating and temperature measuring device further includes a sealing assembly disposed between the tube portion and the lower head; the sealing assembly includes a sealing flange, a high temperature resistant elastic gasket and a number of sets of locking members;

a lower end surface of the tube portion is welded to an upper surface of the sealing flange; a lower surface of the sealing flange is provided with a convex annular step, an end surface of the opening side of the lower head is provided with an annular groove, the high temperature resistant elastic gasket is disposed in the annular groove, and the annular step is tightly abutted against the high temperature resistant elastic gasket and fits within the annular groove; the locking members extends through the sealing flange and the non-heating section of the lower head.

Preferably, a number of first locking holes are provided in the sealing flange spaced along a circumference direction of the sealing flange and extending through an upper surface and a lower surface thereof, the non-heating section of the lower head is provided with a number of second locking holes spaced along a circumference direction of the lower head and communicated with the first locking holes correspondingly, and the second locking hole extends downward to be communicated with the recess from the end surface of the opening side of the lower head.

Preferably, the annular groove is located outside the second locking hole.

Preferably, the high temperature resistant elastic gasket is a graphite gasket.

Preferably, the tube portion is a stainless-steel tube, and the lower head is a hemispherical copper shell.

The present invention further provides a test system for simulating RPV heat exchange characteristics of a nuclear power plant, including the heating and temperature measuring device, a pit simulator, an insulation layer simulator and a cooling tank simulator; wherein the heating and temperature measuring device is configured as a RPV simulator and is suspended in the pit simulator, the insulation layer simulator is disposed on an outer periphery of the RPV simulator, and the cooling tank simulator is disposed on an outer periphery of an upper end of the RPV simulator;

a cooling water flow channel is defined between the insulation layer simulator and the RPV simulator, and a water injection space is defined between the insulation layer simulator and an inner wall surface of the pit simulator; a water inlet communicating the cooling water flow channel with the water injection space is provided at a bottom of the insulation layer simulator, so that cooling water in the water injection space is able to enter the cooling water flow channel through the water inlet, and the cooling water is heated outside the lower head of the RPV simulator to generate a steam-water two-phase flow; an upper end of the insulation layer simulator is provided with an exhaust outlet communicated with the cooling water flow channel, the steam-water two-phase flow flows upward along the cooling water flow channel and then is separated to steam and water when flowing through the exhaust outlet, and the liquid water falls into the cooling tank simulator.

Preferably, the cooling tank simulator includes an annular tank body and a first heat exchanger, a liquid level of the tank body is kept below the exhaust outlet, and the first heat exchanger is disposed in the tank body and below the liquid level thereof.

Preferably, the cooling tank simulator further includes a spray mechanism and/or a second heat exchanger disposed in the tank body and located above the exhaust outlet.

Preferably, a pit wall of the pit simulator is provided with at least one water inlet communicated with the water injection space for accessing the cooling water.

Preferably, the pit simulator, the RPV simulator, the insulation layer simulator and the cooling tank simulator are arranged in a ratio of 1:5 to sizes of the corresponding prototypes respectively.

Preferably, the test system further includes a water return line disposed outside the pit simulator; an upper end of the water return line is communicated with the cooling tank simulator, and a lower end of the water return line is communicated with the water injection space.

The present invention has the following beneficial effects: the present invention is configured to simulate a process that a high temperature core melt is transferred to a wall surface of the RPV(reactor pressure vessel) and flows outside the wall surface of the RPV under a severe accident condition of a nuclear power plant, so that to study the distribution of CHF(critical heat flux) and three-dimensional cooling water flow characteristics at different positions on an outer wall surface of the RPV under a three-dimensional flow condition, thereby providing data support for studying the effectiveness of a severe accident mitigation system -a pit water injection system.

**Brief Description of the Drawings**

The present invention will now be further described with reference to the accompanying drawings and embodiments, and in the drawings:

Fig. 1 is a schematic structural view of a test section of a two-dimensional heating test in a prior art;
Fig. 2 is a cross-sectional view of a test system according to an embodiment of the present invention;
Fig. 3 is a cross-sectional view of a heating and temperature measuring device of the test system in Fig. 2;
Fig. 4 is a cross-sectional view of a lower head of the heating and temperature measuring device in Fig. 3;
Fig. 5 is a schematic view of a heating section of the lower head in Fig. 4;
Fig. 6 is an enlarged schematic view of part A of the heating and temperature measuring device in Fig. 4; and
Fig. 7 is a partial cross-sectional view of the heating section of the lower head in Fig. 5.

## Preferred embodiments

To clearly understand the technical features, objectives and effects of the invention, specific embodiments of the invention will now be described in detail with reference to the accompanying drawings.

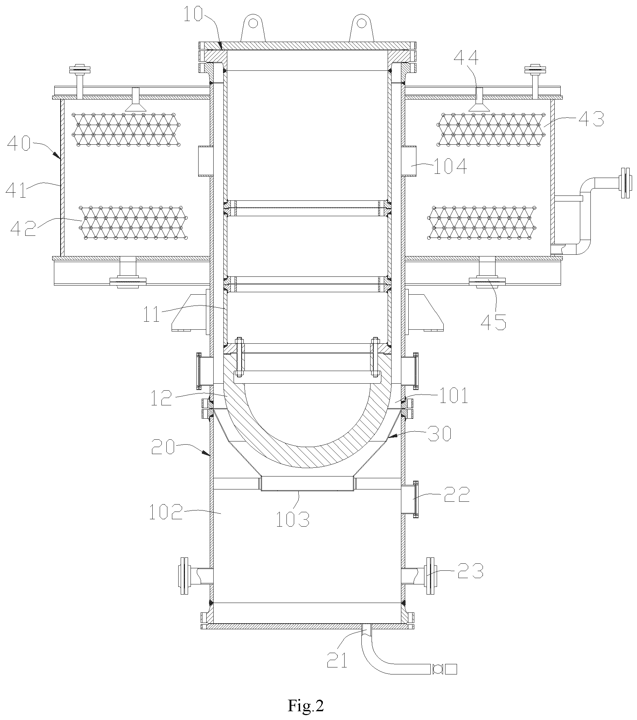

As shown in Fig. 2, a test system for simulating RPV heat exchange characteristics of a nuclear power plant in an embodiment of the present invention includes a heating and temperature measuring device 10, a pit simulator 20, an insulation layer simulator 30, and a cooling tank simulator 40. The heating and temperature measuring device 10 serves as a RPV simulator and is suspended in the pit simulator 20. The insulation layer simulator 30 is provided on an outer periphery of the RPV simulator. The cooling tank simulator 40 is disposed on an outer periphery of an upper end of the RPV simulator.

A cooling water flow channel 101 is defined between the insulation layer simulator 30 and the RPV simulator (the heating and temperature measuring device 10), and a water injection space 102 is defined between the insulation layer simulator 30 and an inner wall surface of the pit simulator 20. A water inlet 103 is provided at a bottom of the insulation layer simulator 30 and communicates the cooling water flow channel 101 with the water injection space 102, so that the cooling water in the water injection space 102 is able to enter the cooling water flow channel 101 through the water inlet 103. An upper end of the insulation layer simulator 30 is provided with an exhaust outlet 104 communicated with the cooling water flow channel 101. The cooling water in the cooling water flow channel 101 is heated outside the RPV simulator to form a steam-water two-phase flow, and the steam-water two-phase flow flows upward along the cooling water flow channel 101 and then is separated to steam and water when flowing through the exhaust outlet 104, and the liquid water falls into the cooling tank simulator 40.

As an embodiment, the pit simulator 20, the RPV simulator (the heating and temperature measuring device 10), the insulation layer simulator 30 and the cooling tank simulator 40 are respectively arranged in a ratio of 1:5 to the corresponding prototypes.

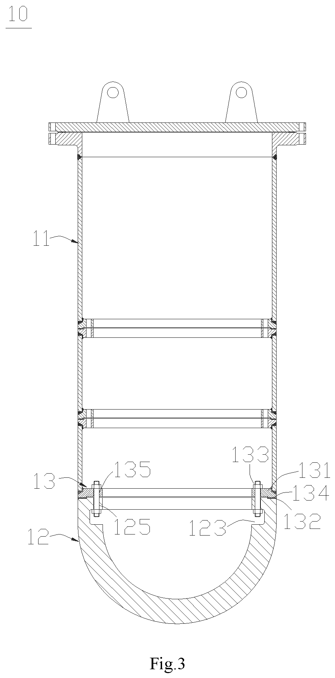

Wherein, the heating and temperature measuring device 10 serves as the RPV simulator and is configured to simulate heat exchange characteristics of the reactor pressure vessel (RPV) under an accident. As shown in Fig. 2 and Fig. 3, the heating and temperature measuring device 10 includes a tube portion 11, a hemispherical lower head 12, a heating assembly (not shown in the drawings) and a temperature measuring assembly. The tube portion 11 is a non-heating portion, and an upper end thereof is enclosed by an end cover, etc. The lower head 12 is connected to a lower end of the tube portion 11 to enclose the lower end of the tube portion 11. The heating assembly heats the lower head 12, enabling a three-dimensional heating section formed on the lower head 12, thereby a heat transfer of the lower head of the RPV and a three-dimensional flow characteristics of an outer wall surface of the RPV can be completely simulated when a serious accident occurs. The temperature measuring assembly is disposed in the lower head 12, and is configured to monitor a temperature change in a wall thickness direction of the lower head 12 to monitor a surface temperature change of the lower head 12. Thereby, a real-time temperature measuring, a real-time monitor of a heating state and a stable measurement of a heat flux of different regions within a heating section 122 are realized, and the disturbance of a heating rod to the temperature measuring is avoided.

The cooling water in the cooling water flow channel 101 is generally heated outside the lower head 12 to generate a steam-water two-phase flow. The cooling water can flow in any direction outside a spherical surface of the lower head 12, thus a three-dimensional flow state of an outer wall surface of the lower head of the RPV is able to be simulated under a real condition, which is more consistent with the actual flow situation.

Specifically, the tube portion 11 may be formed by two or more axial sections sequentially connected in an axial direction, thereby facilitating providing sufficient space for installing the heating assembly and arranging wires and the like, and realizing the operability for an operator.

Alternatively, in the heating and temperature measuring device 10, the tube portion 11 may be a stainless-steel tube, and the lower head 12 may be a hemispherical copper shell.

The heating assembly may be disposed in the lower head 12, and may include a number of heating rods to heat the lower head 12. The heating rods are inserted into the lower head 12 vertical to an inner wall surface of the lower head 12. By a uniform arrangement of a plurality of (eg. hundreds of, or thousands of) the heating rods in the lower head 12, regional fine heating can be achieved with a maximum heating heat flux of $2.0 MW/m^2$.

As shown in Figs. 3 to 5, corresponding to the heating assembly, a number of heating holes 120 are uniformly provided in an inner wall surface of the lower head 12 along a spherical center direction of the lower head 12. The heating hole 120 is a blind hole not extending through an outer wall surface of the lower head 12. Each heating rod is inserted into a corresponding heating hole 120.

Since the heating hole 120 into which the heating rod is inserted is a blind hole, the processing and installation error of the heating rod and the heating hole 120 needs to be strictly controlled, to prevent the heating rod from being pushed out by remaining air in the blind hole when heating, and to ensure sufficient contact between the heating rod and an inner wall surface of the heating hole 120 when being expanded. By controlling a distance between the heating rod and the heating hole 120, the influence of the blind hole on ejection of the heating rod when being heated is achieved, and the heating expansion fitness is achieved, and the burnout possibility of the heating rod is effectively reduced.

Furthermore, in the heating and temperature measuring device 10, the lower head 12 is connected to the lower end of the tube portion 11 in a sealing mode. During a test process, the lower head 12 and the tube portion 11 are submerged in water, and a large number of heating rods are installed in the lower head 12. During the test operation, a body of the lower head 12 has a great temperature gradient and a sealing surface being deformed, thus a good sealing of a contact surface between the lower head 12 and the tube portion 11 is required, to prevent leakage of the contact surface from damaging the device.

To achieve a sealed connection between the lower head 12 and the tube portion 11, the heating and temperature measuring device 10 further includes a sealing assembly 13 disposed between the tube portion 11 and the lower head 12. To reduce the deformation of the sealing surface caused by the transmission of the heat generated by the heating assembly to the sealing assembly, the lower head 12 may include a non-heating section 121 and a heating section 122. The non-heating section 121 is located adjacent to and configured for being matched with the sealing assembly 13, and the heating section 122 is configured for installing the heating assembly therein. The heating hole 120 is defined in the heating section 122.

A thickness of the heating section 122 of the lower head 12 is determined by a length of the heating rod, a heating capacity, the number of the heating holes 120 and a required space of the heating holes 120. If the wall thickness of the heating section 122 is larger, then the length of the heating rod is larger, and the inner space of the heating section 122 is less, thus there is no enough space for drilling a larger number of the heating holes 120. If the wall thickness of the heating section 122 is smaller, then there is enough space inside the heating section 122 for drilling, but the heating capacity and the surface heating power of the heating rod have higher requirement since the length of the heating rod is smaller. Therefore, factors such as the heating design capacity of the heating rods and the number of the heating rods etc. should be fully considered in selecting the wall thickness of the heating section 122. The relationship of the thickness of the lower head 12 and the depth and the quantity of the heating hole 120 are mutual coupling: 1) when a radius of the lower head 12 is defined, the thickness of the lower head 12 determines the depth of the heating hole 120, and the installation spaces and amounts of the heating holes 120 and heating rod wires; 2) a diameter and a heating length of the heating rod are determined by a power, a heating section and a manufacturing process of the heating rod. The thickness of the lower head 12 and the depth and the quantity of the heating hole 120 can be determined by considering the above factors overall.

In the present embodiment, the wall thickness of the lower head 12 (the wall thickness of the heating section 122) is 100mm-120mm. The heating hole 120 has a depth of 85mm-100mm with a tolerance of ± 0.1mm, an inner diameter of 10mm-15mm with a tolerance of -0.00mm to +0.02mm, and a perpendicularity of 0.01mm. The inner wall surface of the heating hole 120 should be smooth, scratch free and has a roughness of <Ra1.6. Correspondingly, the heating rod has a total length of ≤ 120mm, a heating length of 80mm-90mm, and an outer diameter of 10mm-15mm with a tolerance of -0mm to +0.4mm. A rated power of the heating rod can be selected at ~1.8kW.

Specifically, the lower head 12 is provided with an annular recess 123 on an inner wall surface adjacent to an opening side thereof, and the lower head is separated by the recess 123 into the non-heating section 121 and the heating section 122 respectively on an upper side and a lower side of the recess 123. The lower head 12 is connected with the tube portion 11 via the non-heating section 121, and the heating assembly is disposed in the heating section 122. The heating section 122 occupies a large volume of the lower head 12 and is a hemispherical three-dimensional section. The non-heating section 121 and the heating section 122 are connected by a side wall thinned by the recess 123, thereby reducing a contact area between the non-heating section 121 and the heating section 122. The non-heating section 121 acts as an isolation function and provides conditions for the installation of the sealing assembly 13 at the same time.

In the heating section 122 of the lower head 12, a number of the heating rods are evenly spaced and inserted into the corresponding heating holes 120. The heating section 122 may further include a number of heating units, and each heating unit has a plurality of the heating rods therein. To facilitate a power control of each heating unit, the heating rods of different heating units may be connected to different power controllers according to the actual requirements. For example, the powers of the heating rods of the adjacent heating units are different, and by performing heating power controls of different units, to control the temperatures of different units in the entire heating section 122.

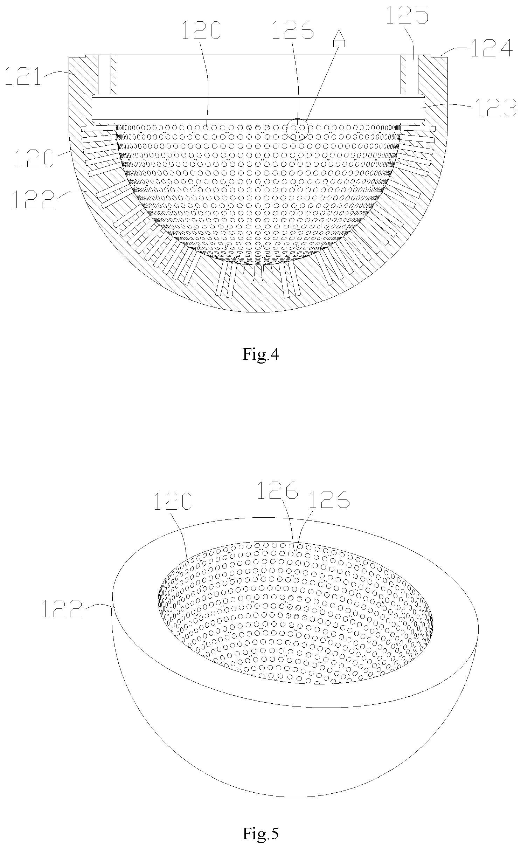

As shown in Fig. 3 and Fig. 4, the sealing assembly 13 includes a sealing flange 131, a high temperature resistant elastic gasket 132 and a number of sets of locking members 133. The sealing flange 131 fits between the tube portion 11 and the lower head 12, and a lower end surface of the tube portion 11 is welded to an upper surface of the sealing flange 131. A lower surface of the sealing flange 131 cooperates with an end surface of the opening side of the lower head 12. Specifically, the lower surface of the sealing flange 131 is provided with a convex annular step 134, and the end surface of the opening side of the lower head 12 is provided with an annular groove 124. The high temperature resistant elastic gasket 132 is disposed in the annular groove 124, and the annular step 134 is tightly abutted against the high temperature resistant elastic gasket 132 and fits within the annular groove 124, to realize a concace-convex sealing fit between the sealing flange 131 and the lower head 12.

Preferably, in the present embodiment, the high temperature resistant elastic gasket 132 is a graphite gasket.

A number of sets of the locking members 133 are spaced distributed along a circumference direction of the sealing flange 131. Each set of locking member 133 extends through the sealing flange 131 and the non-heating section 121 of the lower head 12, to firmly lock the sealing flange 131 with the lower head 12, thereby to firmly lock the tube portion 11 with the lower head 12. The locking member 133 may include a bolt and at least one nut mating therewith.

Corresponding to the locking member 133, a number of first locking holes 135 are provided in the sealing flange 131 spaced along the circumference direction of the sealing flange 131 and extending through an upper surface and a lower surface thereof. The non-heating section 121 of the lower head 12 is provided with a number of second locking holes 125 spaced along the circumference direction of the lower head 12, and the second locking hole 125 is communicated with the first locking hole 135 correspondingly.

Wherein, the first locking hole 135 is located inside the annular step 134 along a radial direction of the sealing flange 131. Correspondingly, the second locking hole 125 is inside the annular groove 124 along a radial direction of the lower head 12. Otherwise, the annular groove 124 is located outside the second locking hole 125.

Particularly, the second locking hole 125 extends downward to be communicated with the recess 123 from the end surface of the opening side of the lower head 12, forming a shape of through hole. The second locking hole 125, of a through hole shape, enables a lower end of the bolt of the locking member 133 to extend into the recess 123, thereby a nut can be screwed with the lower end of the bolt, combined with a nut assembled on an upper end of the bolt, to form a double head locking. It provides a better bolt fastening than in a blind hole, and improves the fastening between the sealing flange 131 and the lower head 12.

Furthermore, since the heating section 122 of the lower head 12 is located below the recess 123, the recess 123 is able to reduce the heat transfer of the heating section 122 to a flange surface, thereby to decrease the expansion degree of the sealing flange 131, and to ensure the connection sealing performance.

The temperature measuring assembly may include a number of sets of thermocouples, and each set of thermocouple includes two thermocouples. The thermocouples are inserted in the lower head 12 perpendicular to an inner wall surface of the lower head 12. Specifically, the thermocouple is inserted in the heating section 122 of the lower head 12.

Corresponding to the temperature measuring assembly, an inner wall surface of the lower head 12 is provided with a number of temperature measuring holes 126 along a spherical center direction of the lower head 12, and each thermocouple is inserted into a corresponding temperature measuring hole 126. Corresponding to two thermocouples being configured as one set, every two temperature measuring holes 126 are also configured as one set, and are arranged corresponding to the two thermocouples of each set of thermocouples. Depths of the two temperature measuring holes 126 corresponding to each set of thermocouples are different, so that insertion depths of the two thermocouples of each set of thermocouples are different and serve as a set of temperature measuring points.

In the present embodiment, corresponding to the wall thickness of the lower head 12, the depths of the two temperature measuring holes 126 corresponding to each set of thermocouples may be 102mm-107mm, 112 mm-117mm respectively.

As shown in Figs. 4-6, in the present embodiment, the two temperature measuring holes 126 corresponding to each set of thermocouples are arranged in a center position of a region surrounded by four heating holes 120, so that each set of thermocouples is located in a center position of a region surrounded by four heating rods. In the lower head 12, the area enclosed by four heating rods has the largest space, thus to facilitate the arrangement and insertion of the thermocouples, and the four heating rods are of the same power.

The two thermocouples of each set of thermocouples are arranged along the spherical center direction with the same tilt angle.

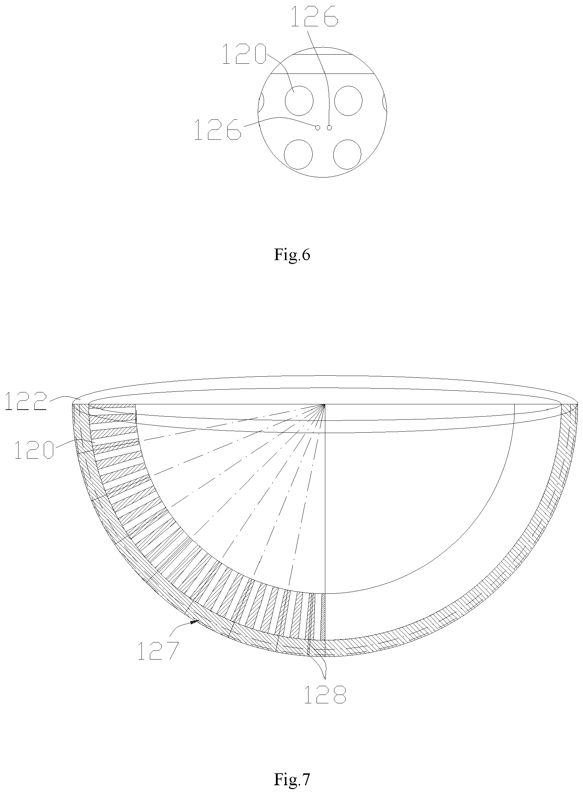

As shown in Fig. 7, by the insertion of the plurality of heating rods in the corresponding heating holes 120 and the uniform arrangement of the plurality of heating rods in the lower head 12, the heating section 122 of the lower head 12 can be divided into a plurality of equal temperature distribution regions 127 (the regions defined by dashed lines in Fig. 7) along the spherical center direction. In the lower head 12, the temperature measuring points of the two thermocouples 128 are arranged in the equal temperature distribution region 127, and the depths of the temperature measuring holes corresponding to the two thermocouples 128 are different.

During the test, a thermal flow density qi of the equal temperature distribution region 127 is obtained by Fourier formula:

$$q_i = \bar{\lambda}\, \frac{t_i - t_o}{\Delta l}$$

In the above formula, $q_i$ is the thermal flow density of the equal temperature distribution region 127, in $W/m^2$; $t_i$ is a measured value of the thermocouple with a smaller depth of one set of thermocouples, and $t_0$ is a

measured value of the thermocouple with a larger depth of one set of thermocouples; $\bar{\lambda}$ is a thermal conductivity (integral average) of a copper; and $\triangle l$ is a depth difference of the two thermocouples in one set of thermocouples, in mm.

Wherein $\bar{\lambda}$ is obtained by the following formula:

$$\bar{\lambda} = \frac{\int_{t_o}^{t_i} \lambda(t)}{t_i - t_o}$$

Furthermore, as shown in Fig. 2, in the test system, the cooling tank simulator 40 includes an annular tank body 41 disposed at an outer periphery of an upper end of the heating and temperature measuring device 10 and a first heat exchanger 42 disposed in the tank body 41.

The exhaust outlet 104 is communicated with an inner space of the tank body 41, and the liquid level of the tank body 41 is kept below the exhaust outlet 104 to keep the exhaust outlet 104 clear during the test. The first heat exchanger 42 is disposed below the liquid level in the tank body 41. The first heat exchanger 42 may include a plurality of cooling tubes for the cooling water flowing and heat exchanging with the water in the tank body 41. The cooling tube may be annularly arround the outer periphery of the upper end of the heating and temperature measuring device 10.

The cooling tank simulator 40 further includes a spray mechanism 44 and / or a second heat exchanger 43 disposed in the tank body 41 and located above the exhaust outlet 104, and is configured for cooling the vapor discharged from the exhaust outlet 104, so that the vapor condenses into liquid and falls into the tank body 41. The second heat exchanger 43 may be arranged with reference to the first heat exchanger 42.

A pit wall of the pit simulator 20 may be provided with at least one water inlet (not shown in the drawings) communicated with the water injection space 102 for accessing cooling water. During the test, the cooling water is fed into the water injection space 102 through the water inlet. When the test is finished, the water inlet may act as a water outlet to drain off water, or a water outlet 21 can be provided at a bottom of the pit simulator 20 to drain off water. Of course, the cooling water may alternatively be fed into the tank body 41 through the spray mechanism 44 of the cooling tank simulator 40 or a interface of the tank body 41, and then the cooling water flows into the water injection space 102.

To facilitate observing the inner condition of the pit simulator 20 during the test, at least one observing window 22 may be provided on a pit wall of the pit simulator 20. Observing window may also be provided on a wall surface of the tank body 41 of the cooling tank simulator 40.

Furthermore, the test system of the invention further includes a water return line (not shown in the drawings) disposed outside the pit simulator 20. An upper end of the water return line is communicated with the cooling tank simulator 40, and a lower end of the water return line is communicated with the water injection space 102. Corresponding to the water return line, a first interface 45 is provided at a lower end of the tank body 41 of the cooling tank simulator 40, and a second interface 23 is provided at a lower end of a pit wall of the pit simulator 20, and the water return line is formed by communicating the pipe between the first interface 45 and the second interface 23. During the test, the cooling water of the tank body 41 can flow back into the water injection space 102 through the water return line.

The test system of the present invention can simulate a whole process of a pit water injection of a nuclear power plant when a severe accident occurs, mainly simulate a process and a flow direction of the cooling water when being injected into the pit and then being heated in the channel outside the lower head of the RPV and the insulation layer of the RPV to form steam-water two-phase flow, and obtain the heat flux of the lower head by real time monitor, thereby the heating characteristics of different regions of a wall surface of the RPV and the two-phase flow characteristics of an outer wall surface of the lower head of the RPV can be studied. Meanwhile, a test, such as a CHF experiment under natural cycle and forced cycle conditions, or a temperature response test under false water injection condition or the like, can be conducted.

The above are only embodiments of the present invention, and thus do not limit the scope of the present invention. The scope of protection of the present application is defined by the appended claims.

**Claims**

1. A heating and temperature measuring device (10), for simulating reactor pressure vessel (RPV) heat exchange

   characteristics when an accident occurs, wherein the heating and temperature measuring device (10) comprises a tube portion (11), a hemispherical lower head (12) connected to a lower end of the tube portion (11), a heating assembly for heating the lower head (12) and a temperature measuring assembly disposed in the lower head (12); and
   the temperature measuring assembly is configured to monitor a temperature change of the lower head (12) in a wall thickness direction to monitor a temperature change of a surface of the lower head (12), wherein an inner wall surface of the lower head

(12) is provided with a number of temperature measuring holes (126) along a spherical center direction of the lower head (12), and

corresponding to the heating assembly, a number of heating holes (120) are provided in the inner wall surface of the lower head (12) along a spherical center direction of the lower head (12).

2. The heating and temperature measuring device according to claim 1, wherein the temperature measuring assembly comprises a number of sets of thermocouples, each set of thermocouple comprises two thermocouples, and the thermocouples are inserted in the lower head (12) perpendicular to an inner wall surface of the lower head (12).

3. The heating and temperature measuring device according to claim 1, wherein the thermocouples are inserted in the temperature measuring holes (126) one by one; depths of the two temperature measuring holes (126) corresponding to each set of thermocouples are different.

4. The heating and temperature measuring device according to claim 3, wherein the depths of the two temperature measuring holes (126) corresponding to each set of thermocouples are 102mm-107mm, 112 mm-117mm respectively.

5. The heating and temperature measuring device according to claim 1, wherein the lower head (12) is provided with an annular recess (123) on an inner wall surface adjacent to an opening side thereof, and the lower head (12) is separated by the recess (123) into a non-heating section (121) and a heating section (122) respectively on an upper side and a lower side of the recess (123); the lower head (12) is connected with the tube portion (11) via the non-heating section (121), and the heating assembly and the temperature measuring assembly are disposed in the heating section (122).

6. The heating and temperature measuring device according to claim 5, wherein the heating and temperature measuring device (10) further comprises a sealing assembly (13) disposed between the tube portion (11) and the lower head (12); the sealing assembly (13) comprises a sealing flange (131), a high temperature resistant elastic gasket (132) and a number of sets of locking members (133); and

a lower end surface of the tube portion (11) is welded to an upper surface of the sealing flange (131); a lower surface of the sealing flange (131) is provided with a convex annular step (134), an end surface of the opening side of the lower head (12) is provided with an annular groove (124), the high temperature resistant elastic gasket (132) is disposed in the annular groove (124), and the annular step (134) is abutted against the high temperature resistant elastic gasket (132) and fits within the annular groove (124); the locking member (133) extends through the sealing flange (131) and the non-heating section (121) of the lower head (12).

7. The heating and temperature measuring device according to claim 6, wherein a number of first locking holes (135) are provided in the sealing flange (131) spaced along a circumference direction of the sealing flange (131) and extending through an upper surface and a lower surface thereof, the non-heating section (121) of the lower head (12) is provided with a number of second locking holes (125) spaced along a circumference direction of the lower head (12) and communicated with the first locking holes (135) correspondingly, and the second locking hole (125) extends downward to be communicated with the recess (123) from the end surface of the opening side of the lower head (12).

8. The heating and temperature measuring device according to claim 7, wherein the annular groove (124) is located outside the second locking hole (125).

9. The heating and temperature measuring device according to claim 6, wherein the high temperature resistant elastic gasket (132) is a graphite gasket.

10. The heating and temperature measuring device according to any one of claims 1 to 9, wherein the tube portion (11) is a stainless-steel tube, and the lower head (12) is a hemispherical copper shell.

11. A test system for simulating RPV heat exchange characteristics of a nuclear power plant, wherein the test system comprises the above heating and temperature measuring device (10) according to any one of claims 1 to 10, a pit simulator (20), an insulation layer simulator (30) and a cooling tank simulator (40); the heating and temperature measuring device (10) is configured as a RPV simulator and is suspended in the pit simulator (20), the insulation layer simulator (30) is disposed on an outer periphery of the RPV simulator, and the cooling tank simulator (40) is disposed on an outer periphery of an upper end of the RPV simulator; and

a cooling water flow channel (101) is defined between the insulation layer simulator (30) and the RPV simulator, and a water injection space (102) is defined between the insulation layer simulator (30) and an inner wall surface of the pit simulator (20); a water inlet (103) communicating the cooling water flow channel (101) with the water injection space (102) is provided at a bottom of the insulation layer simulator (30), so that cooling water in the water injection space (102) is able to enter the cooling water flow channel (10) through the water inlet (103), and the cooling water is heated outside the lower head of the RPV simulator to generate a steam-water two-phase flow; an upper end of the insulation layer simulator (30) is provided with an exhaust outlet (104) communicated with the cooling water flow channel (101), the steam-water two-phase flow flows upward along the cooling water flow channel (101) and then is separated to steam and water when flowing through the exhaust outlet (104), and the liquid water falls into the cooling tank simulator (40).

**12.** The test system according to claim 11, wherein the cooling tank simulator (40) comprises an annular tank body (41) with a liquid level thereof below the exhaust outlet (104), and a first heat exchanger (42) disposed in the tank body (41) and below the liquid level thereof.

**13.** The test system according to claim 12, wherein the cooling tank simulator (40) further comprises a spray mechanism (44) and/or a second heat exchanger (43) disposed in the tank body (41) and located above the exhaust outlet (104).

**14.** The test system according to claim 11, wherein a pit wall of the pit simulator (20) is provided with at least one water inlet communicated with the water injection space (102) for accessing the cooling water.

**15.** The test system according to any one of claims 11 to 14, wherein the pit simulator (20), the RPV simulator, the insulation layer simulator (30) and the cooling tank simulator (40) are arranged in a ratio of 1:5 to sizes of corresponding prototypes respectively.

**16.** The test system according to any one of claims 11 to 14, wherein the test system further comprises a water return line disposed outside the pit simulator (20); an upper end of the water return line is communicated with the cooling tank simulator (40), and a lower end of the water return line is communicated with the water injection space (102).

**Patentansprüche**

**1.** Heiz- und Temperaturmessgerät (10) zum Simulieren von Wärmeaustauscheigenschaften eines Reaktordruckbehälters (reactor pressure vessel - RPV), wenn sich ein Unfall ereignet, wobei das Heiz- und Temperaturmessgerät (10) einen Rohrabschnitt (11), einen halbkugelförmigen unteren Kopf (12), der mit einem unteren Ende des Rohrabschnitts (11) verbunden ist, eine Heizbaugruppe zum Beheizen des unteren Kopfs (12) und eine Temperaturmessbaugruppe, die in dem unteren Kopf (12) angeordnet ist, umfasst; und

wobei die Temperaturmessbaugruppe dazu konfiguriert ist, eine Temperaturänderung des unteren Kopfs (12) in einer Wanddickenrichtung zu überwachen, um eine Temperaturänderung einer Fläche des unteren Kopfs (12) zu überwachen,

wobei eine Innenwandfläche des unteren Kopfs (12) mit einer Anzahl von Temperaturmesslöchern (126) entlang einer Kugelmittenrichtung des unteren Kopfs (12) versehen ist, und entsprechend der Heizbaugruppe entlang einer Kugelmittenrichtung des unteren Kopfs (12) eine Anzahl von Heizlöchern (120) in der Innenwandfläche des unteren Kopfs (12) vorgesehen ist.

**2.** Heiz- und Temperaturmessgerät nach Anspruch 1, wobei die Temperaturmessbaugruppe eine Anzahl von Sätzen von Thermoelementen umfasst, jeder Satz von Thermoelementen zwei Thermoelemente umfasst und die Thermoelemente senkrecht zu einer Innenwandfläche des unteren Kopfes (12) in den unteren Kopf (12) eingesetzt sind.

**3.** Heiz- und Temperaturmessgerät nach Anspruch 1, wobei die Thermoelemente einzeln in die Temperaturmesslöcher (126) eingesetzt sind; wobei Tiefen der zwei Temperaturmesslöcher (126), die jedem Satz von Thermoelementen entsprechen, unterschiedlich sind.

**4.** Heiz- und Temperaturmessgerät nach Anspruch 3, wobei die Tiefen der zwei Temperaturmesslöcher (126), die jedem Satz von Thermoelementen entsprechen, 102 mm-107 mm bzw. 112 mm-117 mm betragen.

**5.** Heiz- und Temperaturmessgerät nach Anspruch 1, wobei der untere Kopf (12) mit einer ringförmigen Aussparung (123) an einer Innenwandfläche benachbart zu einer Öffnungsseite davon versehen ist und der untere Kopf (12) durch die Aussparung (123) in einen Nichtheizbereich (121) und einen Heizbereich (122) auf einer Oberseite bzw. einer Unterseite der Aussparung (123) unterteilt ist; wobei der untere Kopf (12) über den Nichtheizbereich (121) mit dem Rohrabschnitt (11) verbunden ist und die Heizbaugruppe und die Temperaturmessbaugruppe in dem Heizbereich (122) angeordnet sind.

**6.** Heiz- und Temperaturmessgerät nach Anspruch 5, wobei das Heiz- und Temperaturmessgerät (10) ferner eine Dichtungsbaugruppe (13) umfasst, die zwischen dem Rohrabschnitt (11) und dem unteren Kopf (12) angeordnet ist; und wobei die Dichtungsbaugruppe (13) einen Dichtungsflansch (131), eine hochtemperaturbeständige elastische Dichtung (132) und eine Anzahl von Sätzen von Verriegelungselementen (133) umfasst; und

wobei eine untere Endfläche des Rohrabschnitts (11) an eine obere Fläche des Dichtungsflansches (131) geschweißt ist; eine untere Fläche des Dichtungsflansches (131) mit einer konvexen ringförmigen Stufe (134) versehen ist, eine Endfläche der Öffnungsseite des unteren Kopfes (12) mit einer ringförmigen Nut (124) versehen ist, die hochtemperaturbeständige elastische Dichtung (132) in der ringförmigen Nut (124) angeordnet ist und die ringförmige Stufe (134) an der hochtemperaturbeständigen elastischen Dichtung (132) anliegt und in die ringförmige Nut (124) passt; wobei sich das Verriegelungselement (133) durch den Dichtungsflansch (131) und den Nichtheizbereich (121) des unteren Kopfes (12) erstreckt.

7. Heiz- und Temperaturmessgerät nach Anspruch 6, wobei eine Anzahl erster Verriegelungslöcher (135) in dem Dichtungsflansch (131) bereitgestellt ist, die entlang einer Umfangsrichtung des Dichtungsflansches (131) beabstandet sind und sich durch eine obere Fläche und eine untere Fläche davon erstrecken, wobei der Nichtheizbereich (121) des unteren Kopfes (12) mit einer Anzahl zweiter Verriegelungslöcher (125) versehen ist, die entlang einer Umfangsrichtung des unteren Kopfes (12) beabstandet sind und entsprechend mit den ersten Verriegelungslöchern (135) in Verbindung stehen, und sich das zweite Verriegelungsloch (125) nach unten erstreckt, um von der Endfläche der Öffnungsseite des unteren Kopfes (12) aus mit der Aussparung (123) in Verbindung zu stehen.

8. Heiz- und Temperaturmessgerät nach Anspruch 7, wobei sich die ringförmige Nut (124) außerhalb des zweiten Verriegelungslochs (125) befindet.

9. Heiz- und Temperaturmessgerät nach Anspruch 6, wobei die hochtemperaturbeständige elastische Dichtung (132) eine Graphitdichtung ist.

10. Heiz- und Temperaturmessgerät nach einem der Ansprüche 1 bis 9, wobei der Rohrabschnitt (11) ein Edelstahlrohr ist und der untere Kopf (12) eine halbkugelförmige Kupferschale ist.

11. Prüfsystem zum Simulieren von RPV-Wärmetauscheigenschaften eines Kernkraftwerks, wobei das Prüfsystem das vorgenannte Heiz- und Temperaturmessgerät (10) nach einem der Ansprüche 1 bis 10, einen Grubensimulator (20), einen Isolierschichtsimulator (30) und einen Kühltanksimulator (40) umfasst; wobei das Heiz- und Temperaturmessgerät (10) als RPV-Simulator konfiguriert ist und in dem Grubensimulator (20) aufgehängt ist, der Isolierschichtsimulator (30) an einem äußeren Umfang des RPV-Simulators angeordnet ist und der Kühltanksimulator (40) an einem äußeren Umfang eines oberen Endes des RPV-Simulators angeordnet ist; und wobei zwischen dem Isolierschichtsimulator (30) und dem RPV-Simulator ein Kühlwasserströmungskanal (101) definiert ist und zwischen dem Isolierschichtsimulator (30) und einer Innenwandfläche des Grubensimulators (20) ein Wassereinspritzraum (102) definiert ist; wobei an einem Boden des Isolierschichtsimulators (30) ein Wassereinlass (103) bereitgestellt ist, der den Kühlwasserströmungskanal (101) mit dem Wassereinspritzraum (102) verbindet, sodass Kühlwasser in dem Wassereinspritzraum (102) durch den Wassereinlass (103) in den Kühlwasserströmungskanal (10) eintreten kann, und wobei das Kühlwasser außerhalb des unteren Kopfes des RPV-Simulators erhitzt wird, um eine Dampf-Wasser-Zweiphasenströmung zu erzeugen; wobei ein oberes Ende des Isolierschichtsimulators (30) mit einem Abgasauslass (104) versehen ist, der mit dem Kühlwasserströmungskanal (101) in Verbindung steht, die Dampf-Wasser-Zweiphasenströmung nach oben entlang des Kühlwasserströmungskanals (101) strömt und dann in Dampf und Wasser getrennt wird, wenn sie durch den Abgasauslass (104) strömt, und das flüssige Wasser in den Kühltanksimulator (40) fällt.

12. Prüfsystem nach Anspruch 11, wobei der Kühltanksimulator (40) einen ringförmigen Tankkörper (41) mit einem Flüssigkeitsniveau unterhalb des Abgasauslasses (104) und einen ersten Wärmetauscher (42) umfasst, der in dem Tankkörper (41) und unterhalb dessen Flüssigkeitsniveaus angeordnet ist.

13. Prüfsystem nach Anspruch 12, wobei der Kühltanksimulator (40) ferner einen Sprühmechanismus (44) und/oder einen zweiten Wärmetauscher (43) umfasst, der in dem Tankkörper (41) angeordnet ist und sich oberhalb des Abgasauslasses (104) befindet.

14. Prüfsystem nach Anspruch 11, wobei eine Grubenwand des Grubensimulators (20) mit mindestens einem Wassereinlass versehen ist, der mit dem Wassereinspritzraum (102) zum Zugang auf das Kühlwasser in Verbindung steht.

15. Prüfsystem nach einem der Ansprüche 11 bis 14, wobei der Grubensimulator (20), der RPV-Simulator, der Isolierschichtsimulator (30) und der Kühltanksimulator (40) jeweils in einem Verhältnis von 1:5 zu den Größen der entsprechenden Prototypen angeordnet sind.

16. Prüfsystem nach einem der Ansprüche 11 bis 14, wobei das Prüfsystem ferner eine Wasserrücklaufleitung umfasst, die außerhalb des Grubensimulators (20) angeordnet ist; wobei ein oberes Ende der Wasserrücklaufleitung mit dem Kühltanksimulator (40) in Verbindung steht und ein unteres Ende der Wasserrücklaufleitung mit dem Wassereinspritzraum (102) in Verbindung steht.

## Revendications

1. Dispositif de chauffage et de mesure de température (10), destiné à simuler des caractéristiques d'échange de chaleur d'une cuve sous pression de réacteur (RPV) lorsqu'un accident se produit, dans lequel le dispositif de chauffage et de mesure de température (10) comprend une partie de tube (11), une tête inférieure hémisphérique (12) reliée à une extrémité inférieure de la partie de tube (11), un ensemble de chauffage pour chauffer la tête inférieure (12) et un ensemble de mesure de température disposé dans la tête inférieure (12) ; et

   l'ensemble de mesure de température est configuré pour surveiller un changement de température de la tête inférieure (12) dans une direction d'épaisseur de paroi pour surveiller un changement de température d'une surface de la tête inférieure (12),
   dans lequel une surface de paroi interne de la tête inférieure (12) est pourvue d'un certain nombre de trous de mesure de température (126) le long d'une direction centrale sphérique de la tête inférieure (12), et
   correspondant à l'ensemble de chauffage, un certain nombre de trous de chauffage (120) sont prévus dans la surface de paroi interne de la tête inférieure (12) le long d'une direction centrale sphérique de la tête inférieure (12).

2. Dispositif de chauffage et de mesure de température selon la revendication 1, dans lequel l'ensemble de mesure de température comprend un certain nombre d'ensembles de thermocouples, chaque ensemble de thermocouples comprend deux thermocouples, et les thermocouples sont insérés dans la tête inférieure (12) perpendiculairement à une surface de paroi interne de la tête inférieure (12).

3. Dispositif de chauffage et de mesure de température selon la revendication 1, dans lequel les thermocouples sont insérés dans les trous de mesure de température (126) un par un ;
   les profondeurs des deux trous de mesure de température (126) correspondant à chaque ensemble de thermocouples sont différentes.

4. Dispositif de chauffage et de mesure de température selon la revendication 3, dans lequel les profondeurs des deux trous de mesure de température (126) correspondant à chaque ensemble de thermocouples sont respectivement de 102 mm à 107 mm, de 112 mm à 117 mm.

5. Dispositif de chauffage et de mesure de température selon la revendication 1, dans lequel la tête inférieure (12) est pourvue d'un évidement annulaire (123) sur une surface de paroi interne adjacente à un côté d'ouverture de celle-ci, et la tête inférieure (12) est séparée par l'évidement (123) en une section non chauffante (121) et une section chauffante (122) respectivement sur un côté supérieur et un côté inférieur de l'évidement (123) ; la tête inférieure (12) est reliée à la partie de tube (11) par l'intermédiaire de la section non chauffante (121), et l'ensemble chauffant et l'ensemble de mesure de température sont disposés dans la section chauffante (122) .

6. Dispositif de chauffage et de mesure de température selon la revendication 5, dans lequel le dispositif de chauffage et de mesure de température (10) comprend également un ensemble d'étanchéité (13) disposé entre la partie de tube (11) et la tête inférieure (12) ; l'ensemble d'étanchéité (13) comprend une bride d'étanchéité (131), un joint élastique résistant aux hautes températures (132) et un certain nombre d'ensembles d'éléments de verrouillage (133) ; et une surface d'extrémité inférieure de la partie de tube (11) est soudée à une surface supérieure de la bride d'étanchéité (131) ; une surface inférieure de la bride d'étanchéité (131) est pourvue d'une marche annulaire convexe (134), une surface d'extrémité du côté d'ouverture de la tête inférieure (12) est pourvue d'une rainure annulaire (124), le joint élastique résistant aux hautes températures (132) est disposé dans la rainure annulaire (124), et la marche annulaire (134) vient en butée contre le joint élastique résistant aux hautes températures (132) et s'insère dans la rainure annulaire (124) ; l'élément de verrouillage (133) s'étend à travers la bride d'étanchéité (131) et la section non chauffante (121) de la tête inférieure (12).

7. Dispositif de chauffage et de mesure de température selon la revendication 6, dans lequel un certain nombre de premiers trous de verrouillage (135) sont prévus dans la bride d'étanchéité (131) espacés le long d'une direction de circonférence de la bride d'étanchéité (131) et s'étendant à travers une surface supérieure et une surface inférieure de celle-ci, la section non chauffante (121) de la tête inférieure (12) est pourvue d'un certain nombre de seconds trous de verrouillage (125) espacés le long d'une direction de circonférence de la tête inférieure (12) et communiquant avec les premiers trous de verrouillage (135) de manière correspondante, et le second trou de verrouillage (125) s'étend vers le bas pour communiquer avec l'évidement (123) à partir de la surface d'extrémité du côté d'ouverture de la tête inférieure (12) .

**8.** Dispositif de chauffage et de mesure de température selon la revendication 7, dans lequel la rainure annulaire (124) est située à l'extérieur du second trou de verrouillage (125).

**9.** Dispositif de chauffage et de mesure de température selon la revendication 6, dans lequel le joint élastique résistant aux hautes températures (132) est un joint en graphite.

**10.** Dispositif de chauffage et de mesure de température selon l'une quelconque des revendications 1 à 9, dans lequel la partie de tube (11) est un tube en acier inoxydable et la tête inférieure (12) est une coque hémisphérique en cuivre.

**11.** Système d'essai pour simuler des caractéristiques d'échange de chaleur dans une RPV d'une centrale nucléaire, dans lequel le système d'essai comprend le dispositif de chauffage et de mesure de température (10) ci-dessus selon l'une quelconque des revendications 1 à 10, un simulateur de fosse (20), un simulateur de couche d'isolation (30) et un simulateur de cuve de refroidissement (40) ; le dispositif de chauffage et de mesure de température (10) est configuré comme un simulateur de RPV et est suspendu dans le simulateur de fosse (20), le simulateur de couche d'isolation (30) est disposé sur une périphérie extérieure du simulateur de RPV, et le simulateur de cuve de refroidissement (40) est disposé sur une périphérie extérieure d'une extrémité supérieure du simulateur de RPV ; et

un canal d'écoulement d'eau de refroidissement (101) est délimité entre le simulateur de couche d'isolation (30) et le simulateur de RPV, et un espace d'injection d'eau (102) est délimité entre le simulateur de couche d'isolation (30) et une surface de paroi interne du simulateur de fosse (20) ; une entrée d'eau (103) faisant communiquer le canal d'écoulement d'eau de refroidissement (101) avec l'espace d'injection d'eau (102) est prévue au fond du simulateur de couche d'isolation (30), de sorte que l'eau de refroidissement dans l'espace d'injection d'eau (102) puisse entrer dans le canal d'écoulement d'eau de refroidissement (10) par l'entrée d'eau (103), et l'eau de refroidissement est chauffée à l'extérieur de la tête inférieure du simulateur de RPV pour générer un écoulement diphasique vapeur-eau ; une extrémité supérieure du simulateur de couche d'isolation (30) est pourvue d'une sortie d'échappement (104) communiquant avec le canal d'écoulement d'eau de refroidissement (101), l'écoulement diphasique vapeur-eau s'écoule vers le haut le long du canal d'écoulement d'eau de refroidissement (101) puis est séparé en vapeur et en eau lorsqu'il s'écoule à travers la sortie d'échappement (104), et l'eau liquide tombe dans le simulateur de cuve de refroidissement (40).

**12.** Système d'essai selon la revendication 11, dans lequel le simulateur de cuve de refroidissement (40) comprend un corps de cuve annulaire (41) avec un niveau de liquide de celui-ci en dessous de la sortie d'échappement (104), et un premier échangeur de chaleur (42) disposé dans le corps de cuve (41) et en dessous de son niveau de liquide.

**13.** Système d'essai selon la revendication 12, dans lequel le simulateur de cuve de refroidissement (40) comprend également un mécanisme de pulvérisation (44) et/ou un second échangeur de chaleur (43) disposé dans le corps de cuve (41) et situé au-dessus de la sortie d'échappement (104).

**14.** Système d'essai selon la revendication 11, dans lequel une paroi de fosse du simulateur de fosse (20) est pourvue d'au moins une entrée d'eau communiquant avec l'espace d'injection d'eau (102) pour accéder à l'eau de refroidissement.

**15.** Système d'essai selon l'une quelconque des revendications 11 à 14, dans lequel le simulateur de fosse (20), le simulateur de RPV, le simulateur de couche d'isolation (30) et le simulateur de cuve de refroidissement (40) sont disposés dans un rapport de 1:5 par rapport aux tailles des prototypes correspondants respectivement.

**16.** Système d'essai selon l'une quelconque des revendications 11 à 14, dans lequel le système d'essai comprend également une conduite de retour d'eau disposée à l'extérieur du simulateur de fosse (20) ; une extrémité supérieure de la conduite de retour d'eau est en communication avec le simulateur de cuve de refroidissement (40), et une extrémité inférieure de la conduite de retour d'eau est en communication avec l'espace d'injection d'eau (102).

Fig.1

Fig.2

Fig.3

Fig.4

Fig.5

Fig.6

Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103594133 B
- CN 106251919 A

- KR 20100125147 A

**Non-patent literature cited in the description**

- **NOH SANG W et al.** Critical heat flux for APR1400 lower head vessel during a severe accident. *NUCLEAR ENGINEERING AND DESIGN, AMSTERDAM, NL,* 05 March 2013, vol. 258, 116-129